# EUROPÄISCHE PATENTSCHRIFT

(11) **EP 3 609 601 B1**
(45) Veröffentlichungstag und Bekanntmachung des Hinweises auf die Patenterteilung: **27.10.2021**
(21) Anmeldenummer: 18724458.7
(22) Anmeldetag: 10.04.2018
(51) Int. Cl.: B01D 46/24, B01D 46/42

(54) **FILTERELEMENT FÜR EINEN LUFTFILTER EINES KRAFTFAHRZEUGS**
FILTER ELEMENT FOR AN AIR FILTER OF A MOTOR VEHICLE
ÉLÉMENT FILTRANT POUR UN FILTRE À AIR D'UN VÉHICULE AUTOMOBILE

(30) Priorität: 12.04.2017 DE 102017003551
(43) Veröffentlichungstag der Anmeldung: 19.02.2020
(73) Patentinhaber: Daimler AG, 70372 Stuttgart (DE)
(72) Erfinder: MEFFERT, Thomas, 68809 Neulussheim (DE); NAWROTH, Ralf Thomas, 71384 Weinstadt (DE)
(74) Vertreter: JENSEN & SON
(86) Internationale Anmeldenummer: PCT/EP2018/059068
(87) Internationale Veröffentlichungsnummer: WO 2018/189129

(56) Entgegenhaltungen:
- EP-A2- 2 535 550
- WO-A1-2018/044312
- WO-A1-2018/067988
- DE-A1- 4 111 447
- DE-A1- 19 608 589
- DE-A1-102009 016 648
- DE-A1-102014 001 608
- DE-U1- 29 808 779
- US-A1- 2013 232 934

## Beschreibung

Die Erfindung betrifft ein Hohlfilterelement zum Einsetzen in eine Filtervorrichtung zur Filtrierung von Luft, insbesondere einer Brennkraftmaschine, insbesondere eines Kraftfahrzeugs, wobei das Hohlfilterelement ein Filtermaterial umfasst, das um einen Hohlraum herum angeordnet ist, und das Filtermaterial an wenigstens einer Stirnseite von einer flächigen Einfassung dichtend gehalten ist. Ferner betrifft die Erfindung eine Filtervorrichtung zur Filtrierung von Luft, insbesondere einer Brennkraftmaschine, insbesondere eines Kraftfahrzeugs, mit einem solchen Hohlfilterelement, wobei die Filtervorrichtung ein Gehäuse aufweist, umfassend ein Gehäusebasisteil mit Luftauslass sowie einen Gehäusedeckel mit Lufteinlass, der auf das Gehäusebasisteil aufsetzbar ist, und das Hohlfilterelement so in dem Gehäuse angeordnet werden kann, dass es den Lufteinlass für die zu filtrierende Luft vom Luftauslass für filtrierte Luft trennt.

Derartige Hohlfilterelemente und Filtervorrichtungen von Kraftfahrzeugen, insbesondere Kraftwagen, sind aus dem Stand der Technik, insbesondere aus dem Serienfahrzeugbau bekannt. Das Hohlfilterelement weist dabei ein von Luft durchströmbares Filtermaterial, zum Filtern der Luft auf, wobei das Hohlfilterelement im Gehäuse der Filtervorrichtung so anordenbar ist, dass das Hohlfilterelement einen Lufteinlass des Gehäuses von einem Luftauslass des Gehäuses trennt, so dass die durch den sogenannten rohluftseitigen Lufteinlass einströmende Umgebungsluft nur durch das Filtermaterial hindurch, und sodann gereinigt zum sogenannten reinluftseitigen Luftauslass ausströmen kann, von wo sie zur Brennkraftmaschine des Kraftfahrzeugs weitergeleitet wird. Das Gehäuse besteht dabei aus einem Gehäusebasisteil mit einer Öffnung, in die das Hohlfilterelement eingesetzt werden kann, und einem Gehäusedeckel, mit dem das Gehäuse abgedeckt und abgedichtet wird.

Das Hohlfilterelement ist üblicherweise so gestaltet, dass ein flächiges Filtermaterial um einen zentralen Hohlraum herum, bspw. als Faltenbalg oder auch in gewickelten Lagen, angeordnet ist. Die Stirnseiten des im weitesten Sinne ringförmigen, also nicht notwendig kreisförmig, angeordneten Materials sind in dichtendem Material, bspw. in sogenannten Endplatten, eingefasst, so dass die zur reinigende Luft nicht am Filtermaterial vorbei auf die Reinluftseite entweichen kann. Der Luftstrom führt dabei zunächst vom Lufteinlass in den vom Filtermaterial umgebenen Hohlraum und gelangt so an das Filtermaterial. Die stirnseitigen Einfassungen oder Endplatten, an welchen das Filtermaterial dichtend gehalten ist, können bspw. aus luftdichtem schaumstoffartigen Material oder aus eigensteifem Kunststoffmaterial bzw. aus einer Kombination von Beidem sein.

Da Hohlfilterelemente, um ihre Funktion erfüllen zu können, sehr dicht im Gehäuse sitzen müssen, ist eine Entnahme - bspw. im Wartungsfall - wenn das Filterelement für den Austausch durch ein neues, unverbrauchtes Filterelement ersetzt werden soll, nicht ohne Weiteres mühelos zu bewerkstelligen.

Die DE 10 2009 016 648 A1 offenbart ein zylindrisches Filterelement zur Filtration von Luft, welches eine offene und eine geschlossene Endscheibe aufweist. Mittig in der geschlossenen Endscheibe ist eine Griffmulde mit einer Hinterschneidung angeordnet, um das Filterelement erfassen und aus dem Gehäuse entnehmen zu können.

Die DE 10 2014 001 608 A1 beschreibt ebenfalls ein zylindrisches Filterelement mit einer geschlossenen Endscheibe, die muldenartige Vertiefungen aufweist, die im Zusammenwirken mit korrespondierenden Vorsprüngen im Gehäusedeckel für eine radiale und axiale Fixierung des Filterelements im Gehäuse dienen.

Die DE 298 08 779 U1 zeigt ein hohlzylindrisches Filterelement mit einer fest daran befestigten scheibenförmigen geschlossenen Endkappe, die als Gehäusedeckel fungiert. Die Endkappe weist zwei halbmondförmige Vertiefungen auf, die einen zentralen Steg definieren, mit dem das Filterelement in das Gewinde der Filtergehäuseöffnung eingedreht werden kann.

Die EP 1 769 835 B1 zeigt ein Hohlfilterelement der oben beschriebenen Art, das zwecks besserer Handhabung bei der Entnahme des Filterelements aus dem Filtergehäuse eine Griffeinrichtung an seiner der Filtergehäuseöffnung zugewandten Stirnseite des Filterelements aufweist. Die Griffeinrichtung überspannt dabei den Hohlraum, durch den die Luft vom Lufteinlass einströmt.

Die DE 10 2016 000 575 A1 schlägt zur einfacheren Entnahme eines Hohlfilterelements aus einer Gehäusebasis ebenfalls eine Griffeinrichtung an seiner der Filtergehäuseöffnung zugewandten Stirnseite des Hohlfilterelements vor, wobei die Griffeinrichtung bei Nichtgebrauch weitestgehend aus dem Querschnitt des Hohlraums herausgeklappt werden kann.

Die EP 2 535 550 A2 beschreibt ein hohlzylindrisches Filterelement mit einer ringförmigen Endscheibe, die um einen von Luft durchströmbaren Hohlraum herum angeordnet ist. Das ringförmig plissierte Filtermaterial kann dabei so geschlossen werden, dass eine Ausrichtkontur in Form einer über die ganze Filterlänge verlaufenden radialen Ausnehmung zur Definition einer Drehlage des Filterelements im Filtergehäuse entsteht. Beim korrekten Einsatz des Filterelements, wird die Ausnehmung durch einen korrespondierenden Vorsprung im Gehäuse ausgefüllt, und kann für einen Ausbau des Filterelements aus dem Gehäuse nicht als Angriffsfläche genutzt werden.

Die DE 196 08 589 A1 offenbart ebenfalls ein Hohlfilterelement mit einer ringförmigen Endscheibe, die um einen von Luft durchströmbaren Hohlraum herum angeordnet ist. Eine zum Hohlraum hinweisende Hinterschneidung an der offenen Endscheibe bildet eine gewisse Handhabe zum Ergreifen und Entnehmen des Filtereinsatzes aus dem Gehäuse.

Solche Hohlfilterelemente können jedoch - insbesondere bei einer Anwendung als Luftfiltereinsatz in einem Truck - sehr groß und schwer ausfallen. Bei vorgeschlagenen Art der Handhabung eines solchen Filterelements müssen gleichzeitig die Arme auseinandergezogen werden, damit das schwere Filterelement nicht abrutscht. Auch lässt sich bei großen, schweren Filterelementen, die nach längerem Gebrauch sehr fest im Gehäuse eingesessen sein können nicht vermeiden, dass - speziell beim Ausbau des Filterelements - beim Untergreifen des hinterschnittigen Randes tief ins verschmutzte Filtermaterial eingegriffen wird.

Aufgabe der vorliegenden Erfindung ist es, ein Hohlfilterelement und eine Filtervorrichtung so weiterzuentwickeln, dass eine saubere und ergonomische Handhabung des Filterelements beim Aus- und Einbau ermöglicht wird, ohne die Luftströmung zu beeinträchtigen.

Diese Aufgabe wird durch ein Hohlfilterelement mit den Merkmalen der unabhängigen Ansprüche gelöst. Vorteilhafte Ausgestaltungen mit zweckmäßigen Weiterbildungen der Erfindung sind in den abhängigen Ansprüchen angegeben.

Wie bereits einleitend beschrieben, sind Hohlfilterelemente, die zum austauschbaren Einsetzen in eine Filtervorrichtung zur Filtrierung von Luft, insbesondere einer Brennkraftmaschine, insbesondere eines Kraftfahrzeugs, bezweckt sind, so gestaltet, dass das Hohlfilterelement ein Filtermaterial umfasst, das um einen Hohlraum herum angeordnet ist, wobei das Filtermaterial an wenigstens einer Stirnseite von einer flächigen Einfassung dichtend gehalten ist. Erfindungsgemäß ist vorgesehen, dass die Einfassung wenigstens eine als eigensteifes Einlegeteil ausgebildete Griffmulde zum Handhaben des Filterelements aufweist.

Besteht die Einfassung des Filtermaterials bspw. aus einem nachgiebigen Kunststoffmaterial, so ist für die sichere Handhabung des Filterelements gesorgt, wenn die Griffmulde aus einem unnachgiebigeren Material besteht. Die Griffmulde kann als fingerhutartiges oder röhrchenförmiges Gebilde separat hergestellt und geeignet in die Einfassung integriert werden.

Erfindungsgemäß ermöglicht die Griffmulde einer Person das Hohlfilterelement an der Einfassung sicher zu ergreifen, indem sie bspw. den Zeigefinger in die Griffmulde steckt und mit dem Daumen vom Hohlraum aus seitlich gegen die Einfassung drückt. Es kann auch der Daumen in die Griffmulde gesteckt werden und mit den übrigen Fingern vom Hohlraum aus dagegen drückend die Einfassung gefasst werden. Das Filterelement kann so mittels der Griffmulde ohne weitere Hilfsmittel oder Werkzeuge in kurzer Zeit in ein Filtergehäuse eingesetzt oder daraus entnommen werden. Weiterhin behindert die Griffmulde erfindungsgemäß nicht eine Luftzufuhr in den Hohlraum, da sie sich außerhalb des Hohlraumquerschnitts befindet.

In weiterer Ausgestaltung des Hohlfilterelements ist vorgesehen, dass die Einfassung mehrere Griffmulden zum Handhaben des Filterelements aufweist. Sind in der Einfassung also wenigstens zwei Griffmulden vorgesehen, so kann das Hohlfilterelement vorteilhaft beidhändig gehandhabt werden. Dies insbesondere, wenn die Griffmulden weit voneinander entfernt in der Einfassung angebracht sind, weil dann bei der beidhändigen Handhabung besonders gut ein Gleichgewicht herstellbar ist. Sind mehr als zwei Griffmulden vorgesehen, so kann für den Ein- oder Ausbau des Filterelements situativ die günstigste Greifvariante gewählt werden.

Im Falle einer Einfassung, die bezüglich eines auf einer zentralen Achse des Hohlfilterelements liegenden Zentrums punktsymmetrisch gestaltet ist, können in weiterer Ausgestaltung des Hohlfilterelements die Griffmulden - bezogen auf eine Drehung des Hohlfilterelements um 180° um die zentrale Achse - bevorzugt asymmetrisch in der Einfassung angeordnet sein. Eine asymmetrische Anordnung der Griffmulden unterstützt - auch bezüglich einer optischen Orientierung - einen definierten Einbau, insbesondere einen definierten Wiedereinbau des Hohlfilterelements in die Filtervorrichtung. Nicht immer wird das Hohlfilterelement nur zum Austausch gegen ein neues Hohlfilterelement aus der Filtervorrichtung entnommen. Gelegentlich kann ein Hohlfilterelement auch nur vorübergehend - aus Gründen der Inspektion oder der Zugänglichkeit der Filtervorrichtung - entnommen werden. Da sich etwaige am Hohlfilterelement befindliche Dichtungen gegenüber einer korrespondierenden Dichtgeometrie an der Filtervorrichtung während des Gebrauchs des Filterelements "einsitzen" können, ist es vorteilhaft, wenn das Hohlfilterelement bei einer Weiterverwendung möglichst wieder genau mit der gleichen Orientierung in die Filtervorrichtung eingesetzt werden kann, wie vor der Entnahme, da so eine optimale Abdichtung zwischen Filterelement und Filtervorrichtung gewährleistet werden kann. Eine asymmetrische Anordnung der Griffmulden erleichtert hierbei die richtige Orientierung.

In einer weiteren Ausführungsform des Hohlfilterelements ist wenigstens eine Griffmulde hinterschnittig geformt. Durch einen Hinterschnitt an der Griffmulde wird die Handhabung des Filterelements beim Ein- und Ausbau weiter optimiert, da damit das von den Fingern einer Person gefasste Filterelement gut gegen ein Abrutschen gesichert ist.

Zur Erfindung gehört auch eine Filtervorrichtung zur Filtrierung von Luft, insbesondere einer Brennkraftmaschine, insbesondere eines Kraftfahrzeugs, wobei die Filtervorrichtung ein Gehäuse aufweist, das ein Gehäusebasisteil mit einem Luftauslass umfasst, sowie einen Gehäusedeckel mit einem Lufteinlass, der auf das Gehäusebasisteil aufsetzbar ist. Das oben beschriebene Hohlfilterelement kann so in dem Gehäuse angeordnet werden, dass es den Lufteinlass für zu filtrierende Luft vom Luftauslass für filtrierte Luft trennt, wobei der Gehäusedeckel erfindungsgemäß wenigstens einen Stift aufweist, der bei korrektem Einbau des Hohlfilterelements in das Gehäusebasisteil und bei auf das Gehäusebasisteil aufgesetztem Gehäusedeckel in eine ihm zugeordnete Griffmulde der Einfassung des Filtermaterials des Hohlfilterelements ragt.

Dabei ist der an dem Gehäusedeckel angeordnete Stift zumindest teilweise in der ihm zugeordneten Griffmulde aufgenommen. Ist das Filterelement nicht korrekt in das Gehäuse eingesetzt worden, so kann der Stift nicht in die ihm zugeordnete Griffmulde hinein bewegt werden, sondern der Stift kollidiert mit der - gegenüber der Griffmulde - erhöhten Einfassung, so dass der Gehäusedeckel nicht auf das Gehäusebasisteil montiert werden kann. Auf diese Weise kann eine definierte Einbaulage des Hohlfilterelements in der Filtervorrichtung - genauer im Gehäusebasisteil - sichergestellt werden, die, wie bereits weiter oben beschrieben, insbesondere bei einem Wiedereinbau des Hohlfilterelementes von Bedeutung ist. Insbesondere kann beim Vorhandensein mehrerer Stifte und den ihnen zugeordneten Griffmulden vorteilhaft die oben, im Zusammenhang mit dem Hohlfilterelement beschriebene asymmetrische Anordnung mit den gleichen Vorteilen bezüglich eines definierten Einbaus bzw. Wiedereinbaus des Filterelements aufgegriffen werden. Der definierte Einbau ist besonders auch bei Hohlfilterelementen, die auf asymmetrische geometrische Gegebenheiten im Gehäusebasisteil abgestimmt sind, wichtig.

In weiterer Ausgestaltung der Filtervorrichtung ist vorgesehen, dass wenigstens ein Stift so lang ist, dass damit Druck auf die zugeordnete Griffmulde auszuüben ist. Neben der korrekten Montage des Hohlfilterelements ist es auf diese Weise vorteilhaft möglich, das Hohlfilterelement besonders fest in seine Position zu drücken und damit gegen das Gehäuse abzudichten, insbesondere beim Vorhandensein mehrerer Stifte und ihrem Zusammenwirken mit den ihnen zugeordneten Griffmulden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen mit
- Fig. 1: eine schematische und geschnittene Seitenansicht einer erfindungsgemäßen Filtervorrichtung mit darin eingesetztem erfindungsgemäßen Hohlfilterelement und
- Fig. 2: eine schematische Ansicht von seitlich schräg oben auf das Gehäusebasisteil der Filtervorrichtung bei eingesetztem erfindungsgemäßen Hohlfilterelement.

In den Figuren sind gleiche oder funktionsgleiche Elemente mit gleichen Bezugszeichen versehen.

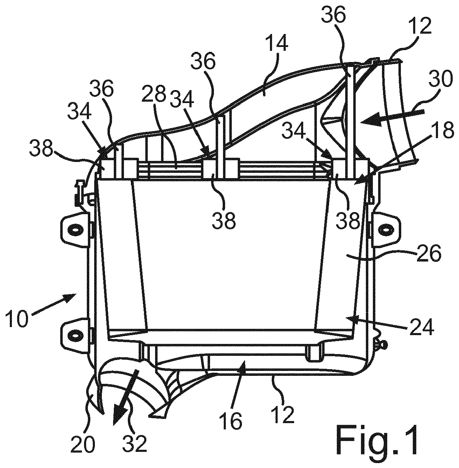

Fig. 1 zeigt in einer schematischen und geschnittenen Seitenansicht eine mit 10 bezeichnete Filtervorrichtung für ein Kraftfahrzeug. Das Kraftfahrzeug ist beispielsweise als Nutzfahrzeug beziehungsweise Nutzkraftwagen ausgebildet und weist eine Verbrennungskraftmaschine auf, mittels welcher das Kraftfahrzeug angetrieben wird. Der Verbrennungskraftmaschine wird dabei Luft zugeführt, welche durch einen Ansaugtrakt zu den Brennräumen der Verbrennungskraftmaschine geleitet wird. Die Filtervorrichtung 10 bildet einen Abschnitt des Ansaugtrakts und dient dazu, die zu den Brennräumen strömende Luft zu filtern.

Die Filtervorrichtung 10 weist ein Gehäuse auf, das ein Gehäusebasisteil 12 sowie einen Gehäusedeckel 14 umfasst, der auf das Gehäusebasisteil aufsetzbar ist. Gehäusebasisteil 12 und Gehäusedeckel 14 bilden zusammen das Gehäuse der Filtereinrichtung. Das Gehäusebasisteil 12 ist mit einem stutzenförmigen Luftauslass 20 versehen, und der Gehäusedeckel 14 weist einen stutzenförmigen Lufteinlass 22 auf. Das Gehäusebasisteil 12 und der Gehäusedeckel 14 können beispielsweise aus einem Kunststoff gefertigt sein.

Das Gehäusebasisteil 12 bildet einen Aufnahmeraum 16 mit einer Öffnung 18 zur Aufnahme eines Hohlfilterelements 24. Aus Fig. 1 ist erkennbar, dass das Hohlfilterelement 24 in dem Gehäusebasisteil 12, insbesondere in dem Aufnahmeraum 16, angeordnet werden kann. In vollständig montierten Zustand der Filtervorrichtung 10 ist das Hohlfilterelement 24 vollständig in dem Gehäusebasisteil 12, das heißt im Aufnahmeraum 16 angeordnet. Ferner ist im vollständig montierten Zustand der Filtervorrichtung der Gehäusedeckel 14 mit dem Gehäusebasisteil 12 verbunden, wobei die Öffnung 18 vom Gehäusedeckels 14 überdeckt wird. Das Hohlfilterelement 24 trennt im vollständig montierten Zustand der Filtereinrichtung den Lufteinlass 22 für zu filtrierende Luft, die aus der Umgebung angesaugt wird, vom Luftauslass 20 für filtrierte Luft, die zu den Brennräumen strömt. Das Hohlfilterelement 24 weist ein von Luft durchströmbares Filtermaterial 26 zum Filtern der Luft auf. Das Filtermaterial 26 ist im weitesten Sinne ringförmig - d.h. nicht notwendig kreisförmig oder über den ganzen Umfang hinweg konvex - um einen zentralen, von Luft durchströmbaren Hohlraum 44 herum angeordnet.

In Fig. 1 wird durch einen Pfeil 30 die ungefilterte, auch als Rohluft bezeichnete Luft, die durch den Lufteinlass-Stutzen 22 in den Aufnahmeraum 16, in den das Hohlfilterelement 24 eingesetzt ist, über den zentralen Hohlraum 44 zu dem Filtermaterial 26 des Hohlfilterelements 24 strömt, veranschaulicht. Die Rohluft strömt durch das Filtermaterial 26 hindurch und wird dabei durch das Filtermaterial 26 gefiltert. Nach der Passage durch das Filtermaterial 26 strömt die gereinigte Luft - auch als Reinluft bezeichnet - zum Luftauslass-Stutzen 20, wie in Fig. 1 durch einen Pfeil 32 veranschaulicht ist. Über den Luftauslass 20 gelangt die gereinigte Luft weiter zur Verbrennungskraftmaschine.

Das Hohlfilterelement 24 weist - zumindest an seiner, der Öffnung 18 zugewandten Stirnseite - eine das Filtermaterial 26 dichtende und haltende Einfassung 28 auf, die beispielsweise aus einem Kunststoff gefertigt ist.

Diese Einfassung 28 besteht üblicherweise aus einem flexiblen Kunststoffmaterial, bspw. einem Kunststoffschaum. Es ist aber auch vorstellbar, dass die Einfassung 28 aus einem festeren Kunststoffmaterial besteht, oder dass der das Filtermaterial 26 dichtende weichere Kunststoff zusätzlich von einem Material aus härterem Kunststoff, als einer Endplatte, abdeckt wird. In eine solche Endplatte, die dann zusammen mit der darunterliegenden Abdichtung die Einfassung 28 bildet, können die vorzusehenden Griffmulden 34 - bspw. bei einer Herstellung der Einfassung 28 als Spritzgussteil - einstückig eingeformt werden.

Wie weiter in Fig. 1 gezeigt, kann die Öffnung der Griffmulden 34 hinterschnittig, also mit einem - nicht notwendig vollständig umlaufenden - einwärts gerichteten Rand, ausgeführt sein, so dass beim Heben des Filterelement 24 ein eingreifender Finger oder Daumen einen verbesserten Halt findet.

Wird die Einfassung 28 des Filterelements 24 ausschließlich - ohne zusätzliche Abdeckung - durch ein weicheres Kunststoffmaterial gebildet, welches das Filtermaterial 26 nach oben hin abdichtet, so können die Griffmulden 34 vorteilhaft als Einlegeteile 38 aus einem härteren Material hergestellt sein, die in die weichere Einfassung 28 eingesetzt werden. Das jeweilige Einlegeteil 38 ist dann röhrenförmig oder fingerhutartig ausgebildet.

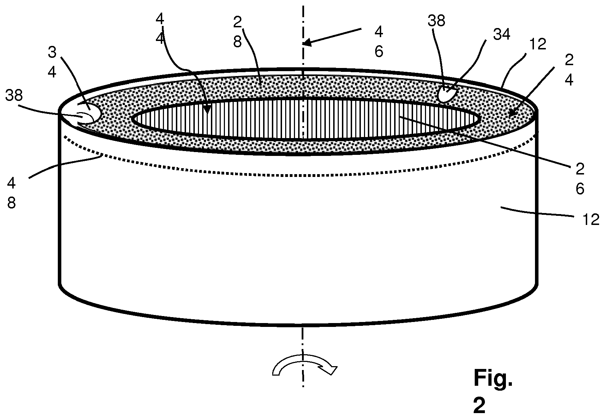

Fig. 2 zeigt schematisch und in einer perspektivischen Seitenansicht wiederum ein erfindungsgemäßes Hohlfilterelement 28, eingesetzt in ein Gehäuseunterteil 12 einer Luftfiltervorrichtung. Im Zentrum des Hohlraums 44 ist eine zentrale Achse 46 des Filterelements 24 markiert. Die mit Fig. 2 gezeigte Einfassung 28 des Hohlfilterelements 24 ist bezüglich eines auf der Achse 46 gelegenen Zentrums punktsymmetrisch gestaltet. Dabei weist die Einfassung 28 des Filtermaterials 26 zwei asymmetrisch angeordnete Griffmulden 34 auf, mittels welcher das Hohlfilterelement 24 von einer Person besonders einfach für den Ein- oder Ausbau gehandhabt werden kann, indem ein Finger in die Griffmulde gesetzt wird und der Daumen in den von der Einfassung 28 umschlossenen Hohlraum 44 des Filterelements 24 eingreift, oder umgekehrt, der Daumen in die Griffmulde 34 gesteckt wird und mit den übrigen Fingern, vom Hohlraum 44 her, dagegen gehalten wird. Die Griffmulden 34 sind weit voneinander entfernt in der Einfassung 28 angeordnet, so dass beim Anheben des Filterelements 24 - trotz Asymmetrie - doch ein möglichst gutes Gleichgewicht herstellbar ist.

Wie in Fig. 2 am linken Rand zu sehen, muss eine vertikale Wandung der Griffmulde 34 oder des Einlegeteils 38 nicht notwendig allseitig oder ringsum geschlossen sein. Die Griffmulde 34 bzw. das Einlegeteil 38 kann bspw. auch seitlich geöffnet sein, so dass ein Eingreifen in die Griffmulde 34 nicht nur von oben, sondern auch vom äußeren Rand des Filterelements 26 her, von der Seite, erfolgen kann.

Neben der Nutzung zur Handhabung des Filterelements 28 beim Ein- bzw. Ausbau, können eine oder mehrere Griffmulden 34 im Zusammenspiel mit einem oder mehreren am Gehäusedeckel 14 angeordneten Stiften 36, wie in Fig. 1 gezeigt, auch dazu genutzt werden eine definierte Montageposition für das Filterelement 24 sicherzustellen. Definierte Montagepositionen sind beispielsweise erforderlich, wenn die geometrischen Verhältnisse im Gehäusebasisteil 12 Asymmetrien aufweisen, an die die Gestalt des Hohlfilterelements 24 angepasst ist.

Durch eine Griffmulde 34 oder bei geeigneter - bspw. nicht punktsymmetrischer - Anordnung mehrerer Griffmulden 34 in einer - wie in Fig. 2 gezeigten punktsymmetrischen - Einfassung 28 des Hohlfilterelement 24 und eines am Gehäusedeckel 14 passend angeordneten, zugehörigen Stifts 34 bzw. mehrerer solcher, Griffmulden 34 zugeordneter Stifte 36, die bei aufgesetztem, montierten Gehäusedeckel 14 jeweils in die ihnen zugeordneten Griffmulden 34 einragen, kann die Einbauposition des Hohlfilterelements 24 eindeutig vorgegeben werden. Damit ist für den Einbau, und insbesondere für den Wiedereinbau, eine Verdrehsicherheit um 180° um die zentrale Achse 46 gewährleistet.

Wird das Filterelement 24 verkehrt herum - also bei den mit den Figuren gezeigten länglich gestalteten Hohlfilterelementen um 180° um die Achse 46 gedreht - in das Gehäusebasisteil 12 eingesetzt, lässt sich der mit einem oder mehreren Stiften 36 kodierte Deckel nicht auf das Gehäusebasisteil 12 aufsetzen bzw. montieren, weil die Stifte mit der, gegenüber den Griffmulden höher bauenden Einfassung 28 kollidieren.

Auch im Fall eines Hohlfilterelements 24, das nur vorübergehend ausgebaut wurde, ist es von Vorteil, wenn es beim Wiedereinsetzen in das Gehäuseunterteil 12 die gleiche Orientierung einnimmt, wie zuvor. Dies insbesondere, wenn das Filterelement 24 mit einer außenseitigen Umrandung, die unterseitig mit einem Dichtmaterial versehen ist, auf einer innenseitigen Umrandung des Gehäuseunterteils 12 dichtend aufliegt. Solche Dichtumrandungen können im Zusammenbau der gezeigten Teile bspw. auf der mit der gepunkteten Linie 48 bezeichneten Höhe des Gehäuseunterteils 12 aufeinander zu liegen kommen. Da sich die Dichtumrandung am Hohlfilterelement 24 aufgrund der Nachgiebigkeit des Materials im Lauf der Zeit an etwaige Ungleichmäßigkeiten des Gehäuseunterteils 12 anpasst bzw. "einsitzt", ist es für eine optimale Dichtigkeit zwischen eingesetztem Filterelement 24 und Gehäuseunterteil 12 günstig, wenn das Filterelement 24 bei einer Weiterverwendung nach einem Ausbau mit der gleichen Orientierung, und damit dann äußerst passgenau, wie zuvor in das Gehäuseunterteil 12 eingesetzt wird.

Werden die Stifte 36 im Gehäusedeckel 14 mit entsprechender Länge ausgeführt, und verfügen die Griffmulden 34 über einen genügend festen Boden, so können die Stifte 36 auch zum zusätzlichen Einpressen des Hohlfilterelements 24 in das Gehäuseunterteil 12 genutzt werden. Bei der Montage des Deckels 14 auf das Gehäuseunterteil 12 kommen die Stifte 36 dann mit dem jeweiligen Boden der Griffmulden 34 in Anlage und drücken das Filterelement 24 so tiefer in seinen Sitz.

## Patentansprüche

1. Hohlfilterelement (24) zum austauschbaren Einsetzen in eine Filtervorrichtung (10) zur Filtrierung von Luft, insbesondere einer Brennkraftmaschine, insbesondere eines Kraftfahrzeugs, wobei das Hohlfilterelement (24) ein Filtermaterial (26) umfasst, das um einen Hohlraum (44) herum angeordnet ist, und das Filtermaterial (26) an wenigstens einer Stirnseite von einer flächigen, den Hohlraum umschließenden Einfassung (28) dichtend gehalten ist,
**dadurch gekennzeichnet, dass**
die Einfassung (28) wenigstens eine Griffmulde (34) zum Handhaben des Hohlfilterelements (24) aufweist, die als eigensteifes Einlegeteil ausgebildet ist

2. Hohlfilterelement (24) nach Anspruch 1,
**dadurch gekennzeichnet, dass**
die Einfassung (28) mehrere Griffmulden (34) zum Handhaben des Hohlfilterelements (24) aufweist.

3. Hohlfilterelement (24) nach Anspruch 2,
**dadurch gekennzeichnet, dass**
die Einfassung (28) des Hohlfilterelements (24) bezüglich eines auf einer zentralen Achse (46) liegenden Zentrums punktsymmetrisch gestaltet ist, und die Griffmulden (34), bezogen auf eine Drehung des Hohlfilterelements (24) um 180° um die zentrale Achse (46), in der Einfassung (28) asymmetrisch angeordnet sind..

4. Hohlfilterelement (24) nach einem der Ansprüche 1 bis 3,
**dadurch gekennzeichnet, dass**
wenigstens eine Griffmulde (34) hinterschnittig gestaltet ist.

5. Filtervorrichtung (10) mit einem Hohlfilterelement (24), nach einem der Ansprüche 1 bis 4, zur Filtrierung von Luft, insbesondere einer Brennkraftmaschine, insbesondere eines Kraftfahrzeugs, wobei die Filtervorrichtung (10) ein Gehäuse aufweist, umfassend
- ein Gehäusebasisteil (12) mit Luftauslass (22) sowie
- einen Gehäusedeckel (14) mit Lufteinlass (20), der auf das Gehäusebasisteil (12) aufsetzbar ist,
wobei das Hohlfilterelement (24) so in dem Gehäuse (12) angeordnet werden kann, dass es den Lufteinlass (20) für zu filtrierende Luft vom Luftauslass (22) für filtrierte Luft trennt,
**dadurch gekennzeichnet, dass**
der Gehäusedeckel (14) wenigstens einen Stift (36) aufweist, der bei korrektem Einbau des Hohlfilterelements (24) in das Gehäusebasisteil (12) und bei auf das Gehäusebasisteil aufgesetztem Gehäusedeckel (14) in eine ihm zugeordnete Griffmulde (34) der Einfassung (28) ragt.

6. Filtervorrichtung (10) nach Anspruch 5,
**dadurch gekennzeichnet, dass**
wenigstens ein Stift (36) so lang ist, dass damit Druck auf die Griffmulde (34) auszuüben ist.

## Claims

1. Hollow filter element (24) for the replaceable installation into a filter device (10) for filtering air, in particular of an internal combustion engine, in particular of a motor vehicle, wherein the hollow filter element (24) comprises a filter material (26) arranged around a cavity (44) and wherein the filter material (26) is held in a sealing manner at at least one end face by a planar bordering (28) enclosing the cavity,
**characterised in that**
the bordering (28) has at least one handle recess (34) designed as an intrinsically rigid insertion part for handling the hollow filter element (24).

2. Hollow filter element (24) according to claim 1,
**characterised in that**
the bordering (28) has several handle recesses (34) for handling the hollow filter element (24).

3. Hollow filter element (24) according to claim 2,
**characterised in that**
the bordering (28) of the hollow filter element (24) is designed point-symmetrically with respect to a centre lying on a central axis (46) and the handle recess (34) is asymmetrically arranged in the bordering (28) with reference to a rotation of the hollow filter element (24) by 180° about the central axis (46).

4. Hollow filter element (24) according to any of claims 1 to 3,
**characterised in that**
at least one handle recess (34) is designed as an undercut.

5. Filter device (10) with a hollow filter element (24) according to any of claims 1 to 4 for filtering air, in particular of an internal combustion engine, in particular of a motor vehicle, wherein the filter device (10) has a housing, comprising
- a housing base part (12) with an air outlet (22) and
- a housing cover (14) with an air inlet (20), which can be placed in the housing base part (12),
wherein the hollow filter element (24) can be arranged in the housing (12) in such a way that it separates the air inlet (20) for air to be filtered from the air outlet (22) for filtered air,
**characterised in that**
the housing cover (14) has at least one pin (36), which projects into an associated handle recess (34) of the bordering (28) if the hollow filter element (24) is correctly installed into the housing base part (12) and the housing cover (14) is placed on the housing base part.

6. Filter device according to claim 5,
**characterised in that**
at least one pin (36) is so long that pressure can be applied to the handle recess (34) thereby.

## Revendications

1. Élément filtrant creux (24) qui peut être remplacé dans un dispositif de filtre (10) pour filtrer de l'air, en particulier d'un moteur à combustion interne, en particulier un véhicule automobile, l'élément filtrant creux (24) comprend un matériau de filtre (26) qui est disposé autour d'un espace creux (44) et le matériau de filtre (26) étant maintenu de manière étanche sur au moins une face avant d'une bordure plate (28) entourant l'espace creux,
**caractérisé en ce que** la bordure (28) présente au moins une poignée encastrée (34) pour manipuler l'élément filtrant creux (24) qui est conçu comme une partie à insérer qui est rigide intrinsèquement.

2. Élément filtrant creux (24) selon la revendication 1, **caractérisé en ce que** la bordure (28) présente plusieurs poignées encastrées (34) pour manipuler l'élément filtrant creux (24).

3. Élément filtrant creux (24) selon la revendication 2, **caractérisé en ce que** la bordure (28) de l'élément filtrant creux (24) est conçue en symétrie ponctuelle par rapport à un centre se trouvant sur un axe central (46) et les poignées encastrées (34), par rapport à une rotation de l'élément filtrant creux (24) sont disposées de manière asymétrique à 180° autour de l'axe central (46) sur la bordure (28).

4. Élément filtrant creux (24) selon l'une quelconque des revendications 1 à 3, **caractérisé en ce qu'**au moins une poignée encastrée (34) est conçue comme une contre-dépouille.

5. Dispositif de filtre (10) comprenant un élément filtrant creux (24) selon l'une des revendications 1 à 4, pour filtrer l'air, en particulier d'un moteur à combustion interne, en particulier d'un véhicule automobile, le dispositif de filtre (10) comportant un boîtier, comprenant
- une partie de base de boîtier (12) dotée d'une sortie d'air (22) et
- un couvercle de boîtier (14) dotée d'une admission d'air (20) qui peut être posé sur la partie de base de boîtier (12),
l'élément filtrant creux (24) pouvant être disposé dans le boîtier (12) de manière à ce qu'il sépare l'admission d'air (20) pour l'air à filtre de la sortie d'air (22) pour l'air filtré,
**caractérisé en ce que** le couvercle de boîtier (14) comporte au moins une tige (36) qui, lorsque l'élément filtrant creux (24) est correctement inséré dans la partie de base de boîtier (12) et lorsque le couvercle de boîtier est placé sur la partie de base de boîtier fait saillie dans une poignée encastrée (34) de la bordure (28) lui étant associé.

6. Dispositif de filtre (10) selon la revendication 5, **caractérisé en ce qu'**au moins un tige (36) est si longue qu'elle exerce une pression sur la poignée encastrée (34).
